# FASCICULE DE BREVET EUROPEEN

(11) **EP 3 537 251 B1**
(45) Date de publication et mention de la délivrance du brevet: **15.09.2021**
(21) Numéro de dépôt: 19161047.6
(22) Date de dépôt: 06.03.2019
(51) Int. Cl.: G05D 23/13

(54) **ROBINET MITIGEUR THERMOSTATIQUE**
THERMOSTAT-MISCHBATTERIE
THERMOSTATIC MIXER TAP

(30) Priorité: 07.03.2018 FR 1851965
(43) Date de publication de la demande: 11.09.2019
(73) Titulaire: Delabie, 80130 Friville Escarbotin (FR)
(72) Inventeur: LAMMERTYN, José, 80130 Friville (FR)
(74) Mandataire: Cabinet Chaillot

(56) Documents cités:
- EP-A1- 1 632 702
- DE-A1- 10 228 212
- DE-A1-102006 032 018
- FR-A1- 3 013 417
- JP-B2- 3 740 666

## Description

### Domaine technique

La présente invention concerne un robinet mitigeur thermostatique sans clapet anti retour pour distribuer de l'eau dans les installations sanitaires telles que douches, lavabo ou évier. Un tel robinet mitigeur thermostatique comporte un corps de forme cylindrique allongée avec, vers l'une de ses extrémités, une arrivée d'eau chaude et une commande d'ouverture de l'eau chaude et, vers son autre extrémité, une arrivée d'eau froide et un organe de réglage de la température de l'eau mitigée. Un tel corps de robinet mitigeur thermostatique comporte également une sortie d'eau mitigée disposée plutôt vers l'arrivée de l'eau froide.

### Arrière-plan technologique

On connait de tels mitigeurs, notamment le modèle selon le document FR3013417 qui comprend une cartouche de mitigeur avec une douille. Le mitigeur divulgué dans ce document est défini selon les caractéristiques du préambule de la revendication 1. Cette douille présente des gorges intérieures qui reçoivent des fentes radiales pour alimenter respectivement l'eau chaude et l'eau froide. Cette douille contient en outre une navette ou tiroir dont la position longitudinale est pilotée par une cellule thermostatique contenant de la cire.

Le document DE 102 28 212 A1 divulgue une vanne classique pour robinet mitigeur.

### Résumé

La présente invention est un perfectionnement à ce type de mitigeur.

Une idée à la base de l'invention est de permettre une meilleure stabilité de la température d'eau mitigée et une diminution importante des coûts de fabrication. Une idée à la base de l'invention est également de fournir un mitigeur qui soit simple à fabriquer. Une idée à la base de l'invention est aussi de fournir un mitigeur présentant de bonnes caractéristiques de résistance à l'usure. Une idée à la base de l'invention est également de fournir un tel mitigeur qui soit simple d'entretien en étant facilement démontable.

Pour cela, l'invention fournit un robinet mitigeur thermostatique disposant d'une commande d'ouverture de l'eau située du côté de l'arrivée de l'eau chaude et d'une commande de réglage de température située du côté de l'arrivée de l'eau froide, ledit robinet mitigeur comportant une sortie d'eau mitigée située du côté de l'arrivée de l'eau froide, qui est caractérisé en ce que le mécanisme de ce robinet mitigeur comprend un corps de tête vissé dans le corps du robinet mitigeur, le dit corps de tête se prolongeant par un tube qui traverse une bague située au niveau de la sortie d'eau mitigée, ledit tube aboutissant dans un manchon qui amène l'eau chaude depuis l'arrivée d'eau chaude, et en ce que le tube reçoit un bouchon situé lui aussi dans le manchon, un siège plat d'arrivée d'eau chaude étant situé dans le bouchon et un siège plat d'arrivée d'eau froide situé dans le tube solidaire du corps de tête, une navette recevant une capsule de cire étant montée coulissante à l'intérieur du tube, la dite navette portant les clapets eau chaude et eau froide coopérant avec les dits respectivement siège plat d'arrivée d'eau chaude et siège plat d'arrivée d'eau froide, et en ce que le tube présente, à l'entrée de sa partie interne côté bouchon, un premier alésage dimensionné de manière à laisser passer librement le clapet d'eau froide, puis un deuxième alésage plus petit, le fond du premier alésage formant un épaulement qui est le siège plat d'arrivée d'eau froide du mitigeur en regard du clapet eau froide, une ou plusieurs fentes radiales étant ménagées dans le dit tube en regard du dit siège eau froide.

Grâce à ces caractéristiques, le robinet mitigeur selon l'invention est simple à fabriquer. En particulier, un tel robinet mitigeur permet de loger la navette dans le tube avec le clapet d'eau froide en regard du siège plat d'arrivée d'eau froide puis, en montant le bouchon sur le tube, de ramener le siège plat d'arrivée d'eau chaude porté par le bouchon en regard du clapet d'eau chaude. Ainsi, une telle navette est simple à monter dans le corps de tête et ne nécessite pas de montage en force, limitant les risques de dégradation des clapets lors du montage de la navette dans le tube.

Une telle navette est en outre simple à retirer, par exemple dans le cadre d'un remplacement de la navette ou de joints portés par la navette, puisqu'il suffit de retirer le bouchon pour qu'une extrémité de la navette soit facilement accessible pour l'extraction de la navette.

Selon d'autres modes de réalisation avantageux, un tel robinet mitigeur thermostatique peut présenter une ou plusieurs des caractéristiques suivantes :
Selon un mode de réalisation, la navette reçoit deux joints plats faisant respectivement clapet pour l'eau chaude et clapet pour l'eau froide et coopérant respectivement avec le siège plat d'arrivée d'eau chaude et le siège plat d'arrivée d'eau froide.

Selon un mode de réalisation, le bouchon comporte une ou plusieurs fentes radiales ménagées en regard du siège d'arrivée d'eau chaude.

Le montage de la navette dans le tube suivi du montage du bouchon sur le tube offre une plus grande liberté de fabrication desdits clapets et sièges de clapets. Cette liberté de fabrication permet de réaliser des sièges eau chaude et eau froide de forme plate dont la surface de coopération avec les clapets est perpendiculaire à l'axe de coulissement de la navette. L'utilisation de tels joints plats et sièges plats pour former les clapets et les sièges de clapet permet une meilleure coopération entre les clapets plats et les sièges plats et donc un meilleur fonctionnement du robinet mitigeur. En particulier, de tels joints plats et sièges de clapets plats permettent une meilleure étanchéité et donc une meilleure stabilité de la température d'eau mitigée. De tels joints se dégradent en outre peu lors des déplacements de la navette en cours d'utilisation et, en cas de chute de pression de l'eau froide, le clapet plat permet d'assurer une fermeture parfaite du siège plat d'arrivée de l'eau chaude, ce qui garantit une parfaite sécurité anti-brulure pour l'usager.

Selon un mode de réalisation, le corps de tête et le tube sont réalisés en une seule pièce, de préférence moulée en matériaux de synthèse.

Selon un mode de réalisation, le tube et le bouchon sont rendus solidaires par un filetage.

Selon un mode de réalisation, la navette est constituée en une seule partie avec cinq gorges périphériques pour recevoir des joints, dont un premier joint torique côté sortie eau mitigée, le dit premier joint torique coopérant avec le deuxième alésage du tube pour empêcher le passage direct de l'eau froide vers la sortie, un deuxième joint torique entre les fentes d'arrivée de l'eau froide et de l'eau chaude pour empêcher l'intercommunication, et un troisième joint torique en regard du bouchon, au-delà de l'arrivée de l'eau chaude, pour assurer le centrage de la navette dans le dit bouchon, les clapets plats étant disposés dans les gorges intermédiaires; la dite navette comportant d'une part une ou des fentes radiales pour le passage de l'eau chaude, les dites fentes étant disposées entre le clapet eau chaude et le troisième joint torique situé sur la navette en regard du bouchon, et d'autre part une ou deux fentes radiales pour le passage de l'eau froide, les dites fentes étant disposées entre le clapet eau froide et le premier joint torique situé sur la navette vers la partie aval, côté sortie eau mitigée.

Selon un autre mode de réalisation, la navette est constituée de trois parties emboîtées, une partie centrale recevant une première partie d'extrémité et une deuxième partie d'extrémité, le clapet d'eau chaude étant intercalé entre la partie centrale et la première partie d'extrémité et le clapet d'eau froide étant intercalé entre la partie centrale et la deuxième partie d'extrémité de sorte que le montage de la première partie d'extrémité et de la deuxième partie d'extrémité sur la partie centrale permette de rendre prisonnier les clapets eau chaude et eau froide.

Une telle navette est simple à réaliser, en particulier une telle navette permet de former des logements pour les joints plats de façon simple et de les rendre ainsi prisonniers pour empêcher tout risque d'extrusion.

Selon un mode de réalisation, les parties d'extrémité de la navette comportent des fentes radiales d'admission d'eau chaude et d'admission d'eau froide situées de part et d'autre des clapets.

Selon un mode de réalisation, le tube comporte une ou plusieurs fentes radiales situées en aval de la navette au regard d'une bague dont le canal intérieur permet de conduire l'eau mitigée vers la sortie du robinet mitigeur.

### Brève description des figures

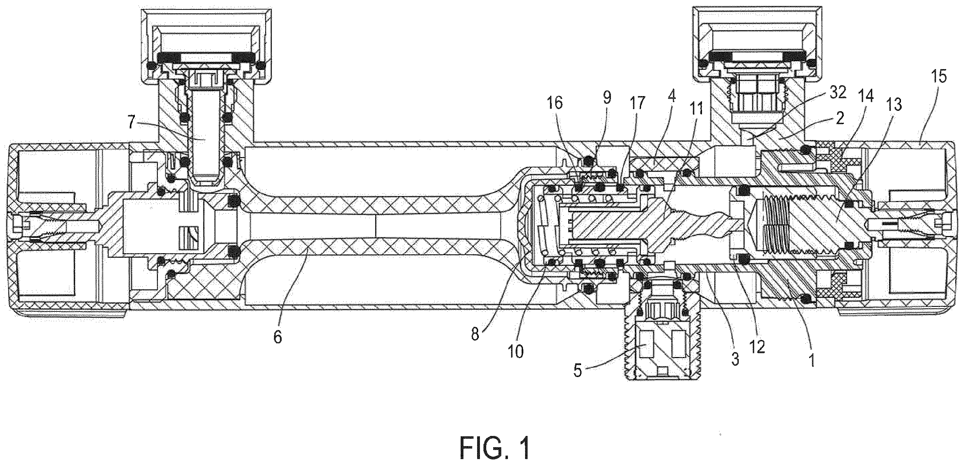

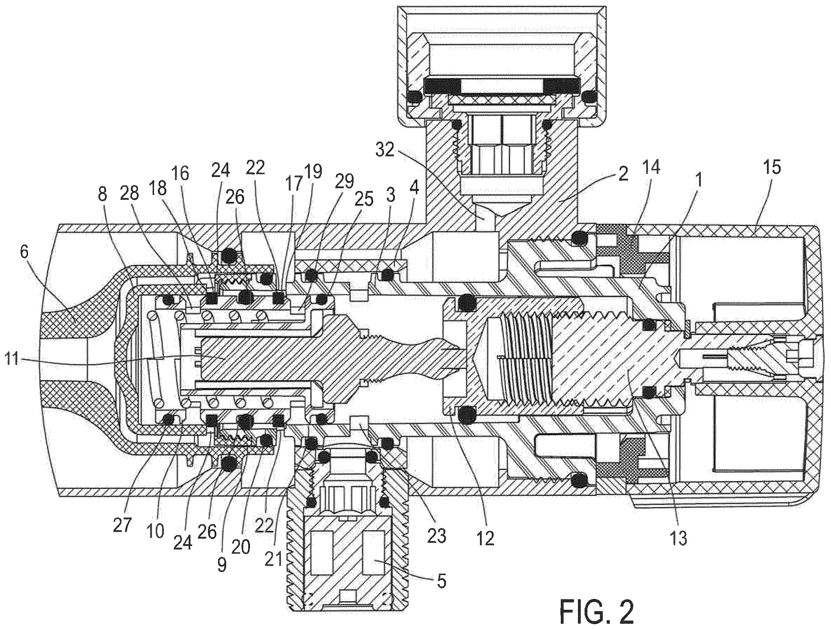

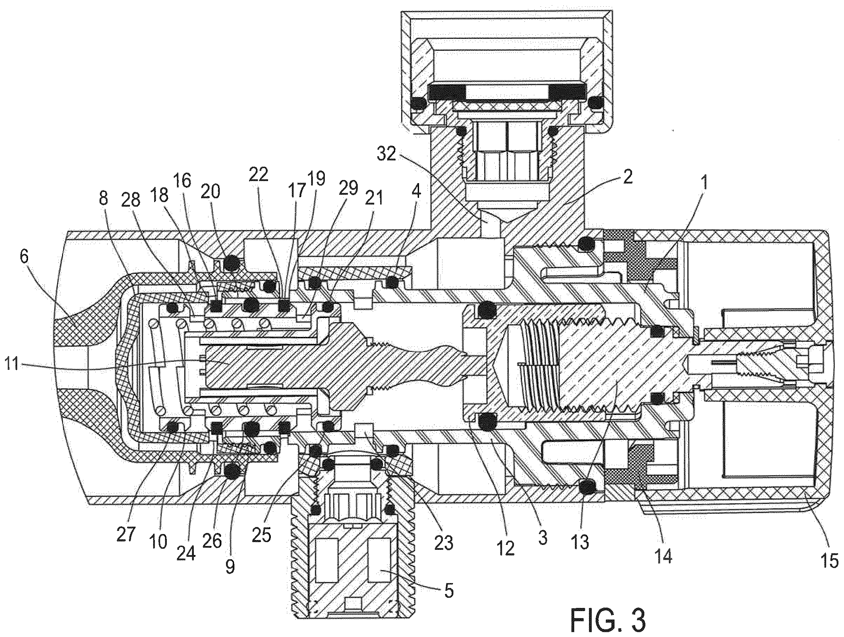

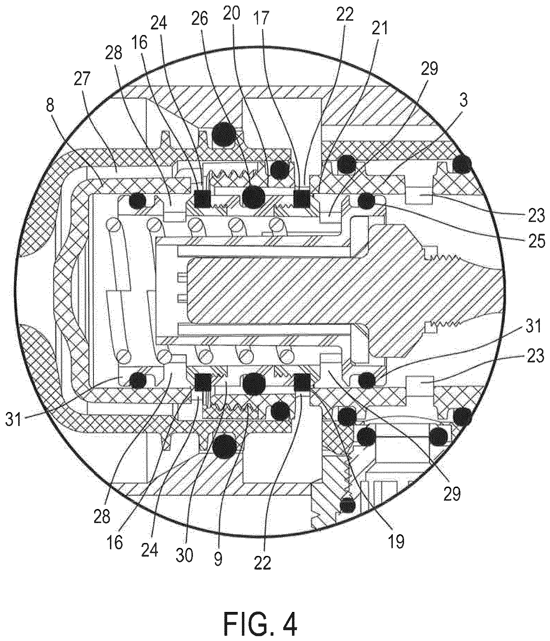

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés.
- **La** **figure 1** est une vue en coupe longitudinale d'un mitigeur complet,
- **La** **figure 2** est une vue en coupe partielle du mitigeur de la figure 1 dans un état d'ouverture d'eau froide maximal ;
- **La** **figure 3** est une vue en coupe partielle du mitigeur de la figure 1 dans un état d'ouverture d'eau chaude maximal ;
- **La** **figure 4** est une vue de détail de la navette selon une variante de réalisation.

### Description détaillée de modes de réalisation

La figure 1 illustre un mécanisme de robinet mitigeur thermostatique comportant un corps de forme cylindrique allongée avec, vers l'une de ses extrémités, une arrivée d'eau chaude 7 et une commande d'ouverture de l'eau chaude et, vers son autre extrémité, une arrivée d'eau froide 32 et un organe de réglage de la température de l'eau mitigée. Un tel corps de robinet mitigeur thermostatique comporte également une sortie d'eau mitigée 5 disposée plutôt vers l'arrivée de l'eau froide 32. Sur cette figure, afin de permettre une meilleure lisibilité, la sortie d'eau mitigée du robinet mitigeur est illustrée dans le même plan que les arrivées d'eau chaude et d'eau froide du robinet mitigeur. Cependant, la sortie d'eau mitigée pourrait être agencée autrement, par exemple orthogonalement aux arrivées d'eau chaude et d'eau froide.

Ce robinet mitigeur thermostatique comporte un corps de tête 1 vissé dans le corps du mitigeur 2, lequel corps de tête 1 se prolonge par le tube 3.

Avantageusement le dit corps de tête 1 et le dit tube 3 sont réalisés en une seule pièce, de préférence par injection de matériaux composite, ce qui présente l'avantage d'une parfaite maîtrise dimensionnelle et un faible coût de revient.

Le tube 3 traverse une bague 4 logée dans le corps du mitigeur 2 et située au niveau de la sortie d'eau mitigée 5. Le tube 3 aboutit dans un manchon 6, logé dans le corps de mitigeur 2, qui amène l'eau chaude depuis une arrivée eau chaude 7 du robinet mitigeur thermostatique.

Le tube 3 reçoit un bouchon 8 situé lui aussi dans le manchon 6. Le tube 3 et le bouchon 8 sont rendus solidaires par un filetage 9 ou tout autre moyen, par exemple par clipsage, système à baïonnette ou autre.

A l'intérieur du tube 3 et du bouchon 8, une navette 10 est montée coulissante. Cette navette 10 reçoit une capsule 11 contenant de la cire qui se contracte ou se dilate plus ou moins selon la température de l'eau circulant dans la navette 10. La capsule 11 coopère avec un piston 12, ledit piston 12 coopérant avec l'organe de régulation de température composé de la tige de commande 13, de la butée de limitation de température 14 et du volant de réglage de température 15 situé à l'extrémité extérieure de la tige de commande 13. Le principe de coopération entre la capsule 11 et la navette 10 permettant de déplacer la navette 10 est par exemple décrit dans le document FR3013417.

Avantageusement, et comme illustré plus en détails sur les figures 2 et 3, la navette 10 reçoit deux joints plats, un premier joint plat 16 faisant clapet pour l'eau chaude et un deuxième joint plat 17 faisant clapet pour l'eau froide. De préférence, de tels joints plats ont une section parallélépipédique et comportent un léger rayon sur leurs arêtes extérieures.

Le bouchon 8 comporte un siège plat d'arrivée d'eau chaude 18 coopérant avec le premier joint plat 16. Le tube 3 solidaire du corps de tête 1 comporte un siège plat d'arrivée d'eau froide19 et coopérant avec le deuxième joint plat 17.

Avantageusement le tube 3 présente, à l'entrée de sa partie interne côté bouchon 8, un premier alésage 20 dimensionné de manière à laisser passer librement le deuxième joint plat 17, puis un deuxième alésage 21 plus petit, le fond du premier alésage 20 formant un épaulement qui est le siège plat d'arrivée d'eau froide 19 du mitigeur en regard du clapet eau froide, une ou plusieurs fentes radiales 22 étant ménagées dans le dit tube 3 en regard du dit siège plat d'arrivée d'eau froide 19.

Ainsi, le montage de la navette 10 dans le tube 3 permet d'introduire sans contrainte le clapet d'eau froide 17 en regard du siège plat d'arrivée d'eau froide 19 et le montage du bouchon 8 sur le tube 3 permet de rapporter directement le siège plat d'arrivée d'eau chaude 18 en regard du clapet d'eau chaude 16.

Le tube 3 comporte en outre une ou plusieurs fentes 23 situées en aval de la navette 10 au regard de la bague 4 dont le canal intérieur permet ainsi de conduire l'eau mitigée vers la sortie 5.

De façon connue, l'eau froide provenant depuis l'arrivée d'eau froide 32 pénètre à l'intérieur du corps 2 et s'écoule entre le dit corps 2 et la bague 4 par un couloir ménagé à cet effet, et peut ainsi gagner les fentes radiales 22 ménagées dans le tube 3.

Une ou plusieurs fentes radiales 24 sont ménagées dans le bouchon 8 en regard du siège d'arrivée d'eau chaude 18.

Selon un mode de réalisation illustré sur les figures 2 et 3, la navette 10 est constituée en une seule partie avec cinq gorges périphériques pour recevoir des joints, dont un premier joint torique 25 côté sortie eau mitigée, le dit premier joint torique 25 coopérant avec le deuxième alésage 21 du tube 3 pour empêcher le passage direct de l'eau froide vers la sortie, un deuxième joint torique 26 coopérant avec le premier alésage 20 du tube 3 et situé entre les fentes d'arrivée de l'eau froide 22 et de l'eau chaude 24 pour empêcher l'intercommunication, et un troisième joint torique 27 est situé à l'intérieur du bouchon 8, au-delà du siège d'arrivée de l'eau chaude 18, pour assurer le centrage de la navette 10 dans le dit bouchon 8, les clapets plats 16, 17 étant disposés dans les gorges intermédiaires; la dite navette 10 comportant d'une part une ou des fentes radiales 28 pour le passage de l'eau chaude, les dites fentes 28 étant disposées entre le clapet eau chaude 16 et le troisième joint torique 27 situé sur la navette 10 en regard du bouchon 8, et d'autre part une ou deux fentes radiales 29 pour le passage de l'eau froide, les dites fentes 29 étant disposées entre le clapet eau froide 17 et le premier joint torique 25 situé sur la navette 10 vers la partie aval, côté sortie eau mitigée 5.

Les fentes radiales d'admission d'eau chaude 28 et d'admission d'eau froide 29 débouchent dans un espace interne creux de la navette 10 entourant la cartouche de cire 11. Cet espace interne creux débouche dans le tube 3 et permet le mélange de l'eau chaude arrivant par la ou les fentes radiales d'admission d'eau chaude 28 et de l'eau froide arrivant par la ou les fentes radiales d'admission d'eau froide 29.

La figure 4 illustre une variante de réalisation de la navette 10 dans laquelle le corps de la navette est réalisé en 3 parties emboîtées. Une partie centrale 30 recevant deux bagues 31 formant les parties d'extrémité 31 de la navette 10. Un moyen tel qu'un filetage, ou un système de clipsage permettant une liaison permanente des trois parties 30, 31 de la navette 10. Les gorges intermédiaires de la navette 10 dans lesquelles sont logés les joints plats formant les clapets d'eau chaude 16 et d'eau froide 17 sont avantageusement formées par coopération entre la partie centrale 30 et les parties d'extrémité 31. Cette disposition a pour avantage de permettre un serrage contrôlé des joints plats et de les rendre ainsi prisonniers ce qui évite les phénomènes de vibration et d'extrusion en cas de fortes pressions de l'eau chaude et ou de l'eau froide.

Dans cette variante, la partie centrale 30 de la navette 10 reçoit le deuxième joint torique 26 situé entre les joints plats. Ce deuxième joint torique 26 coulisse avec la navette 10 dans le tube 3 pour éviter l'intercommunication entre l'eau chaude venant des fentes 24 et l'eau froide venant des fentes 22.

La capsule 11 de cire est logée dans le tube 3 en appui contre la navette 10 et permet de déplacer la navette 10 dans le tube en fonction de son état de dilatation. Le déplacement de la navette 10 dans le tube 3 amène les clapets 16, 17 à coopérer avec les sièges plats 18, 19 correspondant et à autoriser à une plus ou moins grande quantité d'eau chaude et/ou d'eau froide de pénétrer dans l'espace interne de la navette, en fonction de la position de la navette 10 dans le tube 3.

Ainsi, la figure 2 illustre un état d'ouverture total de l'arrivée d'eau froide dans lequel le clapet d'eau froide 17 est en éloigné du siège plat d'arrivée d'eau froide 19, permettant l'arrivée d'eau froide dans l'espace interne de la navette 10, et dans lequel le clapet d'eau chaude 16 est en appui contre le siège plat d'arrivée d'eau chaude 18 bloquant l'arrivée d'eau chaude dans l'espace interne de la navette 10.

Inversement, la figure 3 illustre un état d'ouverture total de l'arrivée d'eau chaude dans lequel le clapet d'eau froide 17 est en appui contre le siège plat d'arrivée d'eau froide 19, bloquant l'arrivée d'eau froide dans l'espace interne de la navette 10, et dans lequel le clapet d'eau chaude 16 est éloigné du siège plat d'arrivée d'eau chaude 18 permettant l'arrivée d'eau chaude dans l'espace interne de la navette 10.

D'autres détails concernant l'alimentation en eau chaude et/ou en eau froide, la coopération entre la navette et la capsule de cire ou encore le réglage de la température au moyen de la commande de réglage sont par exemple décrits dans le document FR3013417.

Bien que l'invention ait été décrite en liaison avec un mode de réalisation particulier, il est évident qu'elle n'y est nullement limitée et qu'elle comprend tous les équivalents techniques des moyens décrits ainsi que leurs combinaisons si celles-ci entrent dans le cadre de la présente invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Robinet mitigeur thermostatique disposant d'une commande d'ouverture de l'eau située du côté de l'arrivée de l'eau chaude (7) et d'une commande de réglage de température située du côté de l'arrivée de l'eau froide (32), ledit robinet mitigeur comportant une sortie d'eau mitigée (5) située du côté de l'arrivée de l'eau froide (32), le mécanisme de ce robinet mitigeur comprenant un corps de tête (1) vissé dans le corps du robinet mitigeur (2), le dit corps de tête (1) se prolongeant par un tube (3) qui traverse une bague (4) située au niveau de la sortie d'eau mitigée (5), ledit tube (3) aboutissant dans un manchon (6) qui amène l'eau chaude depuis l'arrivée d'eau chaude (7), une navette (10) recevant une capsule de cire (11) étant montée coulissante à l'intérieur du tube (3), **caractérisé en ce que** le tube (3) reçoit un bouchon (8) situé lui aussi dans le manchon (6), un siège plat d'arrivée d'eau chaude (18) étant situé dans le bouchon (8) et un siège plat d'arrivée d'eau froide (19) étant situé dans le tube (3) solidaire du corps de tête (1), la dite navette (10) portant les clapets eau chaude (16) et eau froide (17) coopérant avec les dits respectivement siège plat d'arrivée d'eau chaude (18) et siège plat d'arrivée d'eau froide (19), et **en ce que** le tube (3) présente, à l'entrée de sa partie interne côté bouchon (8), un premier alésage (20) dimensionné de manière à laisser passer librement le clapet d'eau froide (17), puis un deuxième alésage (21) plus petit, le fond du premier alésage (20) formant un épaulement qui est le siège plat d'arrivée d'eau froide (19) du mitigeur en regard du clapet eau froide (17), une ou plusieurs fentes radiales (22) étant ménagées dans le dit tube (3) au niveau dudit siège d'arrivée d'eau froide (19).

2. Robinet mitigeur thermostatique selon la revendication 1, **caractérisé en ce que** la navette (10) reçoit deux joints plats faisant respectivement clapet pour l'eau chaude (16) et clapet pour l'eau froide (17) et coopérant respectivement avec le siège plat d'arrivée d'eau chaude (18) et le siège plat d'arrivée d'eau froide (19), et dans lequel le bouchon (8) comporte une ou plusieurs fentes radiales (24) ménagées au niveau du siège d'arrivée d'eau chaude (18).

3. Robinet mitigeur thermostatique selon l'une des revendications 1 à 2, **caractérisé en ce que** le corps de tête (1) et le tube (3) sont réalisés en une seule pièce, de préférence moulée en matériaux de synthèse.

4. Robinet mitigeur selon l'une des revendications 1 à 3, **caractérisé en ce que** le tube (3) et le bouchon (8) sont rendus solidaires par un filetage.

5. Robinet mitigeur selon l'une des revendications 1 à 4, **caractérisé en ce que** la navette (10) est constituée de trois parties emboîtées, une partie centrale (30) recevant une première partie d'extrémité (31) et une deuxième partie d'extrémité (31), le clapet d'eau chaude (16) étant intercalé entre la partie centrale (30) et la première partie d'extrémité (31) et le clapet d'eau froide (17) étant intercalé entre la partie centrale (30) et la deuxième partie d'extrémité (31) de sorte que le montage de la première partie d'extrémité (31) et de la deuxième partie d'extrémité (31) sur la partie centrale (30) permette de rendre prisonnier les clapets eau chaude (16) et eau froide (17).

6. Robinet mitigeur selon revendication 5 **caractérisé en ce que** les parties d'extrémité (31) de la navette (10) comportent des fentes radiales d'admission d'eau chaude (28) et d'admission d'eau froide (29) situées de part et d'autre des clapets (16, 17), et **en ce que** le tube (3) comporte une ou plusieurs fentes radiales (23) situées en aval de la navette (10) au regard d'une bague (4) dont le canal intérieur permet de conduire l'eau mitigée vers la sortie (5) du robinet mitigeur.

## Patentansprüche

1. Thermostat-Mischbatterie, die über eine Wasseröffnungssteuerung verfügt, die sich an der Seite der Warmwasserzufuhr (7) befindet, und eine Temperatureinstellsteuerung, die sich an der Seite der Kaltwasserzufuhr (32) befindet, wobei die Mischbatterie einen Mischwasserauslass (5) aufweist, der sich an der Seite der Kaltwasserzufuhr (32) befindet, wobei der Mechanismus dieser Mischbatterie einen in den Körper der Mischbatterie (2) geschraubten Kopfkörper (1) umfasst, wobei sich der Kopfkörper (1) mittels eines Rohrs (3) verlängert, das einen Ring (4) durchquert, der sich im Bereich des Mischwasserauslasses (5) befindet, wobei das Rohr (3) in einer Muffe (6) endet, die warmes Wasser ab der Warmwasserzufuhr (7) heranführt, wobei ein Schlitten (10), der eine Wachskapsel (11) aufnimmt, im Inneren des Rohrs (3) gleitend angebracht ist, **dadurch gekennzeichnet, dass** das Rohr (3) einen Verschluss (8) aufnimmt, der sich ebenfalls in der Muffe (6) befindet, wobei sich ein flacher Warmwasserzufuhrsitz (18) in dem Verschluss (8) befindet und ein flacher Kaltwasserzufuhrsitz (19) in dem Rohr (3) befindet, das mit dem Kopfkörper (1) fest verbunden ist, wobei der Schlitten (10) die Warmwasser- (16) und Kaltwasserventile (17) trägt, die mit den jeweiligen flachen Warmwasserzufuhrsitz (18) und Kaltwasserzufuhrsitz (19) zusammenwirken, und dass das Rohr (3) am Eingang in seinen inneren Teil an der Seite des Verschlusses (8) eine erste Bohrung (20) aufweist, die derart bemessen ist, dass das Kaltwasserventil (17) frei passieren kann, dann eine zweite, kleinere Bohrung (21), wobei der Boden der ersten Bohrung (20) einen Absatz bildet, der der dem Kaltwasserventil (17) zugewandte flache Kaltwasserzufuhrsitz (19) der Mischbatterie ist, wobei ein oder mehrere radiale Schlitze (22) in dem Rohr (3) im Bereich des Kaltwasserzufuhrsitzes (19) eingerichtet sind.

2. Thermostat-Mischbatterie nach Anspruch 1, **dadurch gekennzeichnet, dass** der Schlitten (10) zwei Flachdichtungen aufnimmt, die jeweils als Ventil für das warme Wasser (16) und Ventil für das kalte Wasser (17) dienen und jeweils mit dem flachen Warmwasserzufuhrsitz (18) und dem flachen Kaltwasserzufuhrsitz (19) zusammenwirken, und wobei der Verschluss (8) einen oder mehrere radiale Schlitze (24) aufweist, die im Bereich des Warmwasserzufuhrsitzes (18) eingerichtet sind.

3. Thermostat-Mischbatterie nach einem der Ansprüche 1 bis 2, **dadurch gekennzeichnet, dass** der Kopfkörper (1) und das Rohr (3) aus einem einzigen, vorzugsweise aus synthetischem Material geformten Teil hergestellt sind.

4. Mischbatterie nach einem der Ansprüche 1 bis 3, **dadurch gekennzeichnet, dass** das Rohr (3) und der Verschluss (8) durch ein Gewinde fest verbunden sind.

5. Mischbatterie nach einem der Ansprüche 1 bis 4, **dadurch gekennzeichnet, dass** der Schlitten (10) aus drei verschachtelten Teilen, einem zentralen Teil (30), der einen ersten Endteil (31) aufnimmt und einem zweiten Endteil (31) besteht, wobei sich das Warmwasserventil (16) zwischen dem zentralen Teil (30) und dem ersten Endteil (31) befindet und sich das Kaltwasserventil (17) zwischen dem zentralen Teil (30) und dem zweiten Endteil (31) befindet, so dass die Montage des ersten Endteils (31) und des zweiten Endteils (31) auf dem zentralen Teil (30) erlaubt, die Warmwasser- (16) und Kaltwasserventile (17) einzuschließen.

6. Mischbatterie nach Anspruch 5, **dadurch gekennzeichnet, dass** die Endteile (31) des Schlittens (10) radiale Warmwassereinlass- (28) und Kaltwasserauslassschlitze (29) aufweisen, die sich zu beiden Seiten der Ventile (16, 17) befinden, und dass das Rohr (3) einen oder mehrere radiale Schlitze (23) aufweist, die sich dem Schlitten (10) nachgelagert einem Ring (4) zugewandt befinden, dessen Innenkanal erlaubt, das gemischte Wasser zum Ausgang (5) der Mischbatterie zu leiten.

## Claims

1. A thermostatic mixer tap having a water opening control located on the side of the hot water inlet (7) and a temperature adjustment control located on the side of the cold water inlet (32), said mixer tap including a mixed water outlet (5) located on the side of the cold water inlet (32), the mechanism of this mixer tap comprising a head body (1) screwed into the body of the mixer tap (2), said head body (1) extending by a tube (3) that passes through a ring (4) located at the mixed water outlet (5), said tube (3) terminating in a sleeve (6) that brings the hot water from the hot water inlet (7), a shuttle (10) receiving a wax capsule (11) being mounted sliding inside the tube (3), **characterized in that** the tube (3) receives a stopper (8) that is also located in the sleeve (6), a flat hot water inlet seat (18) being located in the stopper (8) and a flat cold water inlet seat (19) being located in the tube (3) secured to the head body (1), said shuttle (10) bearing the hot water (16) and cold water (17) valves cooperating with said respective flat hot water inlet seat (18) and flat cold water inlet seat (19), and **in that** the tube (3) has, at the inlet of its inner part on the stopper (8) side, a first bore (20) dimensioned so as to allow the cold water valve (17) to pass freely, then a second, smaller bore (21), the bottom of the first bore (20) forming a shoulder that is the flat cold water inlet seat (19) of the mixer opposite the cold water valve (17), one or several radial slits (22) being arranged in said tube (3) at said cold water inlet seat (19).

2. The thermostatic mixer tap according to claim 1, **characterized in that** the shuttle (10) receives two flat seals respectively serving as valve for the hot water (16) and valve for the cold water (17) and respectively cooperating with the flat hot water inlet seat (18) and the flat cold water inlet seat (19), and wherein the stopper (8) includes one or several radial slits (24) arranged at the hot water inlet seat (18).

3. The thermostatic mixer tap according to one of claims 1 to 2, **characterized in that** the head body (1) and the tube (3) are made in a single piece, preferably molded from synthetic materials.

4. The mixer tap according to one of claims 1 to 3, **characterized in that** the tube (3) and the stopper (8) are secured by a thread.

5. The mixer tap according to one of claims 1 to 4, **characterized in that** the shuttle (10) is made up of three nested parts, a central part (30) receiving a first end part (31) and a second end part (31), the hot water valve (16) being inserted between the central part (30) and the first end part (31) and the cold water valve (17) being inserted between the central part (30) and the second end part (31) such that the mounting of the first end part (31) and the second end part (31) on the central part (30) makes it possible to capture the hot water (16) and cold water (17) valves.

6. The mixer tap according to claim 5, **characterized in that** the end parts (31) of the shuttle (10) include radial hot water inlet (28) and cold water inlet (29) slits located on either side of the valves (16, 17), and **in that** the tube (3) includes one or several radial slits (23) located downstream of the shuttle (10) opposite a ring (4), the inner channel of which makes it possible to lead the mixed water toward the outlet (5) of the mixer tap.
